# EUROPÄISCHE PATENTSCHRIFT

(11) **EP 1 247 965 B1**
(45) Veröffentlichungstag und Bekanntmachung des Hinweises auf die Patenterteilung: **14.02.2007**
(21) Anmeldenummer: 02006167.7
(22) Anmeldetag: 19.03.2002
(51) Int. Cl.: F02D 41/12, F02D 41/00

(54) **Verfahren, Computerprogramm und Steuer- und/oder Regelgerät zum Betreiben einer Brennkraftmaschine, sowie Brennkraftmaschine**
Method, computer programme and control and/or regulation device for operating an internal combustion engine, and internal combustion engine
Procédé, programme informatique et dispositif de commande et/ou de réglage pour le fonctionnement d'un moteur à combustion interne, ainsi qu'un moteur à combustion interne

(30) Priorität: 28.03.2001 DE 10115323
(43) Veröffentlichungstag der Anmeldung: 09.10.2002
(73) Patentinhaber: ROBERT BOSCH GMBH, 70442 Stuttgart (DE); FORD-WERKE AKTIENGESELLSCHAFT, 50725 Köln (DE)
(72) Erfinder: Wahl, Joachim, 67134 Birkenheide (DE); Glahn, Claus Juergen, 50769 Köln (DE); Limbach, Sigurd, 42657 Solingen (DE); Lenz, Ingo, 50868 Köln (DE)

(56) Entgegenhaltungen:
- EP-A- 0 459 006
- EP-A- 0 800 947
- EP-A- 0 937 887
- EP-A- 1 160 437
- US-A- 4 494 505
- US-A- 4 799 466
- US-A- 4 870 933
- US-A- 5 894 827

## Beschreibung

### Stand der Technik

Die Erfindung betrifft zunächst ein Verfahren zum Betreiben einer Brennkraftmaschine, insbesondere eines Kraftfahrzeugs, nach dem Oberbegriff des Anspruchs 1.

Ein solches Verfahren ist aus der US 5,894,827 bekannt. Bei üblichen Brennkraftmaschinen wird die Leistung der Brennkraftmaschine durch den variablen Öffnungsquerschnitt eines Ansaugrohres (beispielsweise durch einen variablen Winkel einer Drosselklappe) gesteuert. Im Schubbetrieb der Brennkraftmaschine, bei der diese also keine Leistung abgeben muss, sondern, z.B. bei einer Bergabfahrt, durch das Kraftfahrzeug angetrieben wird, wird zur Benzineinsparung kein Kraftstoff in den Brennraum eingespritzt, es findet also keine Verbrennung von Kraftstoff im Brennraum statt.

Bei einer Brennkraftmaschine, welche mit dem bekannten Verfahren betrieben wird, wurde ein Emissionsanstieg im Laufe der Lebensdauer der Brennkraftmaschine festgestellt. Auch traten in einigen Fällen Verbrennungsaussetzer nach einiger Zeit vermehrt auf. Auch der Liefergrad und damit auch die Leistung sanken bei der mit dem bekannten Verfahren betriebenen Brennkraftmaschine langfristig.

Die vorliegende Erfindung hat daher die Aufgabe, ein Verfahren der eingangs genannten Art so weiterzubilden, dass über die gesamte Lebensdauer der Brennkraftmaschine ein im Wesentlichen gleich gutes Emissionsverhalten und keine Leistungseinbußen beobachtet werden können.

Diese Aufgabe wird durch ein Verfahren mit den Merkmalen des Anspruchs 1 gelöst. Weitere Lösungen finden sich in neben- und untergeordneten Ansprüchen.

### Vorteile der Erfindung

Durch die erfindungsgemäße Maßnahme wird im Schubbetrieb verhindert, dass sich durch eine starke Verengung des Querschnitts des Abschnitts des Luftzuführungskanals während des Schubbetriebs ein starker Unterdruck aufbaut. Hierdurch wiederum wird verhindert, dass es durch einen solch extremen Unterdruck beispielsweise zu einem Schmieröleintrag aus Einlassventilschaftdichtungen in den Luftzuführungskanal kommt. Ein solch extremer Unterdruck könnte aber auch zu Schmutzablagerungen beipielsweise an einer Einrichtung führen, mit der der Querschnitt eines Abschnitts des Luftzuführungskanals verengt werden kann. Derartige Schmutzablagerungen würden außerdem die freien Bewegungsmöglichkeiten einer solchen Einrichtung einschränken.

Durch entsprechende Schmutzablagerungen im Luftzuführungskanal können solche Schmutzpartikel zu einem späteren Zeitpunkt auch in den Brennraum gelangen, wo sie sporadisch z.B. Zündkerzen oder Einspritzventile verschmutzen können. All diese durch einen starken Unterdruck im Luftzuführungskanal während des Schubbetriebs hervorgerufenen Verschmutzungen bewirken eine schlechtere Verbrennung und führen zu einem Emissionsanstieg. Dies wird durch die erfindungsgemäße Maßnahme wirkungsvoll verhindert, da bei ihr aufgrund des geringeren Unterdrucks im Schubbetrieb im Luftzuführungskanal die besagten Verschmutzungen schon im Entstehungsprozess vermindert werden können.

Bei einer solchen Einrichtung kann der Ladungsbewegungskanal nicht nur etwas verengt, sondern vollständig abgeschlossen werden kann.

Ferner ist ein solcher Ladungsbewegungskanal über ein eigenes Einlassventil mit dem Brennraum verbunden. Der Ladungsbewegungskanal dient dazu, den Grad der Turbulenz und/oder des Dralls im Brennraum den unterschiedlichen Betriebszuständen der Brennkraftmaschine anzupassen. In einem solch vollständig abgeschlossenen Ladungsbewegungskanal käme es zu einem extremen Unterdruck, durch den Verschmutzungen unterschiedlichster Provenienz in den Ladungsbewegungskanal quasi "angesaugt" und an den Brennraum weitergegeben werden würden.

Beispiele für solche Verschmutzungen sind ein Eintrag von Schmieröl aus Einlassventilschaftdichtungen und Schmutzablagerungen von rückströmendem Abgas sowie von einer externen Abgasrückführung. Die Verschmutzungen können sich an den Wänden des Ladungsbewegungskanals ebenso wie an der Einrichtung selbst niederschlagen, durch welche der Ladungsbewegungskanal ggf. vollständig abgeschlossen werden kann. Durch die erfindungsgemäße Maßnahme wird erreicht, dass, wenn überhaupt, dann nur ein geringer Unterdruck im Ladungsbewegungskanal während der Phase des Schubbetriebs erzeugt wird, so dass auch der entsprechende Verschmutzungsgrad deutlich reduziert wird.

In der Folge ergibt sich auch über die Lebensdauer der Brennkraftmaschine eine bessere Verbrennung und ein geringerer Emissionsanstieg. Die Gefahr von Verbrennungsaussetzern aufgrund von Überfettung oder Verschmutzungseintrag in die Brennkraftmaschine ist bei einer Brennkraftmaschine, welche mit dem erfindungsgemäßen Verfahren betrieben wird, reduziert. Auch ein Leistungsverlust aufgrund einer durch langfristige Verschmutzungen bedingten Verschlechterung des Liefergrads kommt kaum mehr vor. Dabei sei darauf hingewiesen, dass das erfindungsgemäße Verfahren kostengünstig realisiert werden kann, da keinerlei zusätzlichen Komponenten erforderlich sind.

In einer Weiterbildung dieses Verfahrens ist angegeben, dass der Querschnitt des Ladungsbewegungskanals durch die Verstellung einer Ladungsbewegungseinrichtung, insbesondere einer Ladungsbewegungsklappe, eines Ladungsbewegungsschiebers und/oder eines entsprechenden Strömungskörpers, mindestens etwas, vorzugsweise maximal, freigegeben wird. Die Ansteuerung derartiger Ladungsbewegungseinrichtungen ist besonders einfach realisierbar.

Ein weiteres Merkmal der Erfindung ist die Übertragung der gewünschten Bremswirkung des Motors an das Haupt-Drosselorgan (normalerweise eine Drosselklappe) für den Schubbetrieb. Dies geschieht durch das gewünschte weitgehende Öffnen der (zylindernahen) Ladungsbewegungsklappe, was einem Entfall einer in Reihe geschalteten Drossel entspricht, und kompensatorischem weiteren Schließen des Hauptdrosselorgans. In den andereen Betriebszustaänden wird das motorische Drosselverhalten normalerweise durch den Einfluss beider Stelleinrichtungen bestimmt.

Vorgeschlagen wird auch, dass der Querschnitt des Abschnitts des Luftzuführungskanals kurz vor dem Wiederbeginn der Kraftstoffeinspritzung gegen Ende des Schubabschaltebetriebs wieder auf einen gewünschten Wert verengt wird. Hierdurch ist sichergestellt, dass dann, wenn der Schubbetrieb tatsächlich beendet wird und die Brennkraftmaschine durch Verbrennung von Kraftstoff im Brennraum wieder Leistung erzeugt, sofort jene Strömungsverhältnisse im Brennraum vorliegen, welche für eine emissions- und verbrauchsoptimale Verbrennung des Kraftstoffs im Brennraum erforderlich sind. Die gewünschte Stellung ergibt sich dabei aus verschiedenen Zustandsparametern der Brennkraftmaschine, wie z.B. Drehzahl, Fahrer-Wunschmoment usw., und ermöglicht den sofortigen Übergang vom Schubbetrieb in einen optimalen Betrieb der Brennkraftmaschine.

Um zu verhindern, dass der Druck im Luftzuführungskanal während der Querschnittsverengung am Ende des Schubbetriebs so abrupt absinkt, dass es zu einem Abdampfen von an der Wand des Luftzuführungskanals beipielsweise anhaftendem Kraftstoff oder anderen Stoffen kommt, was wiederum eine entsprechende Gemischüberfettung und eine hohe HC-Emission zur Folge hätte, wird vorgeschlagen, dass der Querschnitt des Abschnitts des Luftzuführungskanals allmählich im Sinne einer Dashpot-Funktion verengt wird. Eine Dashpot-Funktion ist beispielsweise in der DE 42 21 674 A1 beschrieben, auf deren Offenbarung hier ausdrücklich Bezug genommen wird.

### Zeichnung

Nachfolgend wird ein Ausführungsbeispiel der Erfindung unter Bezugnahme auf die beiliegende Zeichnung im Detail erläutert. In der Zeichnung zeigen:
- Fig. 1:: ein schematisches Blockschaltbild einer Brennkraftmaschine;
- Fig. 2:: ein Flussdiagramm eines Verfahrens zum Betreiben der Brennkraftmaschine von Fig. 1;
- Fig. 3:: ein Diagramm zur Erläuterung des Verfahrens von Fig. 2, in dem die Stellung einer Drosselklappe der Brennkraftmaschine von Fig. 1 über der Zeit dargestellt ist;
- Fig. 4:: ein Diagramm zur Erläuterung des Verfahrens von Fig. 2, in dem die Stellung einer Ladungsbewegungsklappe der Brennkraftmaschine von Fig. 1 über der Zeit dargestellt ist; und
- Fig. 5:: ein Diagramm zur Erläuterung des Verfahrens von Fig. 2, in dem der Druck in einem Saugrohr und der Druck in einem Ladungsbewegungskanal der Brennkraftmaschine von Fig. 1 über der Zeit dargestellt ist.

### Beschreibung des Ausführungsbeispiels

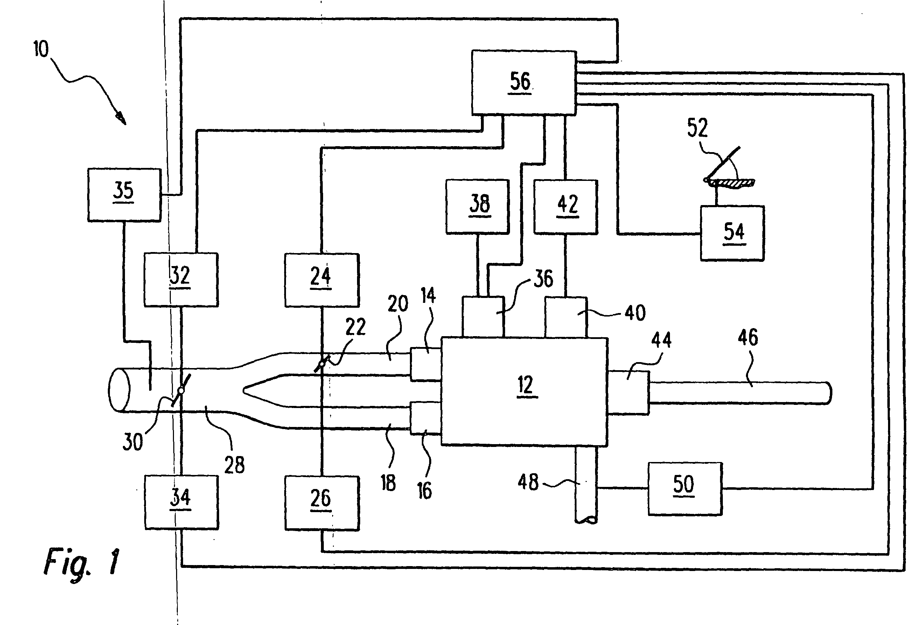

In Fig. 1 trägt eine Brennkraftmaschine insgesamt das Bezugszeichen 10. Sie umfasst einen Brennraum 12, dem Verbrennungsluft über zwei Einlassventile 14 und 16 zugeführt wird. Das in Fig. 1 untere Einlassventil 16 ist mit einem Kanal 18 verbunden, der so ausgebildet ist, dass sich - bei durchgängigem Kanal - im Brennraum 12 eine turbulente und/oder drallbehaftete Strömung einstellt. Das in Fig. 1 obere Einlassventil 14 ist mit einem Ladungsbewegungskanal 20 verbunden. Im Ladungsbewegungskanal 20 ist eine Ladungsbewegungsklappe 22 angeordnet.

Diese kann von einem Stellmotor 24 zwischen einer Stellung, in der sie den Querschnitt des Ladungsbewegungskanals 20 vollständig verschließt und einer Stellung, in der sie den Querschnitt des Ladungsbewegungskanals 20 im Wesentlichen vollständig freigibt, verstellt werden. Die Stellung der Ladungsbewegungsklappe 22 wird von einem Stellungssensor 26 Ausführungsbeispiel ist anstelle der Ladungsbewegungsklappe ein Ladungsbewegungsschieber oder ein beweglicher Strömungskörper vorgesehen.

Der Kanal 18 und der Ladungsbewegungskanal 20 münden stromaufwärts in einen gemeinsamen Rohrabschnitt 28, in dem eine Drosselklappe 30 angeordnet ist. Die Drosselklappe 30 kann wiederum von einem Stellmotor 32 verstellt werden. Die Stellung der Drosselklappe 30 wird ebenfalls von einem Stellungssensor 34 abgegriffen. In einem nicht dargestellten Ausführungsbeispiel sind mehrere solcher Sensoren vorhanden. Die durch den Abschnitt 28 stömende Luftmenge wird von einem Heißfilm-Luftmengenmesser 35 ("HFM-Sensor") erfasst.

Kraftstoff wird dem Brennraum 12 über ein Einspritzventil 36 direkt zugeführt. Das Einspritzventil 36 sitzt also in unmittelbarer Nähe des Brennraums 12. Das Einspritzventil 36 wird wiederum von einem Kraftstoffsystem 38 mit Kraftstoff versorgt. Das Kraftstoff-Luftgemisch im Brennraum 12 wird von einer Zündkerze 40 entzündet. Die Zündkerze 40 wird von einem Zündsystem 42 angesteuert. Die heißen Verbrennungsabgase verlassen den Brennraum 12 über ein Auslassventil 44 und werden von dort in ein Abgasrohr 46 abgeleitet.

Die Drehzahl einer Kurbelwelle 48 wird von einem Drehzahlgeber 50 abgegriffen. Der Benutzer der Brennkraftmaschine 10 teilt sein Fahrer-Wunschmoment über ein Gaspedal 52 mit, dessen Stellung von einem Stellungsgeber 54 erfasst wird. Die Brennkraftmaschine 10 umfasst ferner ein Steuer- und Regelgerät 56, welches ausgangsseitig mit der Zündanlage 42, dem Einspritzventil 36 und den beiden Stellmotoren 32 bzw. 24 der Drosselklappe 30 bzw. der Ladungsbewegungsklappe 22 verbunden ist. Eingangsseitig erhält das Steuer- und Regelgerät 56 Signale von den Stellungssensoren 26 und 34, vom Drehzahlgeber 50 und vom Stellungsgeber 54 des Gaspedals 52. Ferner werden dem Steuer- und Regelgerät 56 auch noch Signale vom HFM-Sensor 35 zugeleitet.

### Die Brennkraftmaschine 10 wird folgendermaßen betrieben:

Bei niedrigen bis mittleren Drehzahlen der Brennkraftmaschine 10 und ebensolchen Fahrleistungswünschen arbeitet diese im sogenannten Schichtbetrieb. In diesem liegt das Kraftstoff-Luftgemisch im Brennraum 12 geschichtet vor. Dies bedeutet, dass im Bereich der Zündkerze 40 ein relativ fettes, zündfähiges Gemisch vorhanden ist, wohingegen sich im übrigen Brennraum 12 ein relativ mageres Gemisch befindet. Der Stellmotor 32 der Drosselklappe 30 wird in diesem Betriebszustand vom Steuer- und Regelgerät 56 so angesteuert, dass sich die Drosselklappe 30 in ihrem weitgehend geöffneten Zustand befindet. Entsprechend dem Fahrer-Wunschmoment, welches über den Stellungsgeber 54 des Gaspedals 52 an das Steuer- und Regelgerät 56 übermittelt wird, wird vom Einspritzventil 36 eine mehr oder weniger große Kraftstoffmenge in den Brennraum 12 eingespritzt.

Bei vergleichsweise hohen Drehzahlen- und/oder Fahrer-Wunschmomenten wird der Stellmotor 24 der Ladungsbewegungsklappe 22 so angesteuert, dass der Querschnitt des Ladungsbewegungskanals 20 im Wesentlichen frei ist. Entsprechend der Darstellung in Fig. 1 befände sich in einem solchen Fall die Ladungsbewegungsklappe 22 in einer im Wesentlichen horizontalen und somit geöffneten Stellung. Bei niedrigen Fahrer-Wunschmomenten wird der Ladungsbewegungskanal 20 von der Ladungsbewegungsklappe 22 mehr oder weniger geschlossen. In diesem Fall gelangt die Verbrennungsluft mehr oder weniger ausschließlich über den Kanal 18 in den Brennraum 12, was die Ausbildung der gewünschten Ladungebewegung im Brennraum 12 auch bei niedrigen Drehzahlen und niedrigen Fahrer-Wunschmomenten ermöglicht.

Wird keine Leistung von der Brennkraftmaschine 10 gefordert, kann diese in einem sogenannten "Schubbetrieb" betrieben werden. Dies bedeutet, dass das Steuer- und Regelgerät 56 das Einspritzventil 36 so ansteuert, dass kein Kraftstoff in den Brennraum 12 eingespritzt wird. Auf diese Weise kann im Schubbetrieb der Brennkraftmaschine 10 Kraftstoff gespart werden.

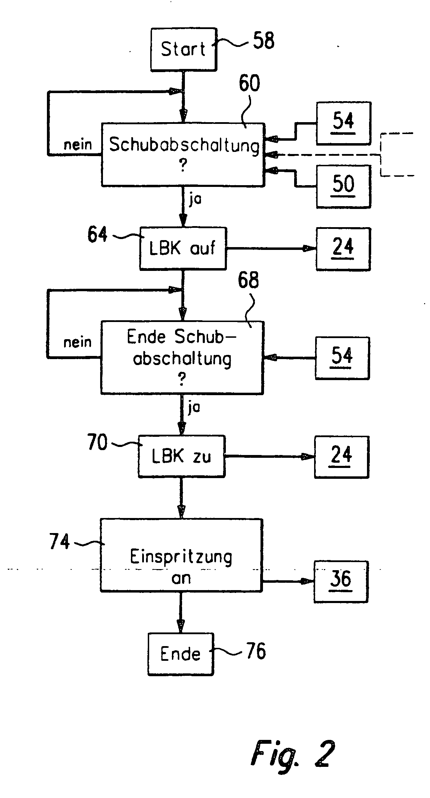

Das weitere Verfahren im Schubbetrieb ist als Computerprogramm im Steuer- und Regelgerät 56 abgelegt. Es wird nun unter Bezugnahme auf die Fig. 2 - 5 im Detail erläutert:

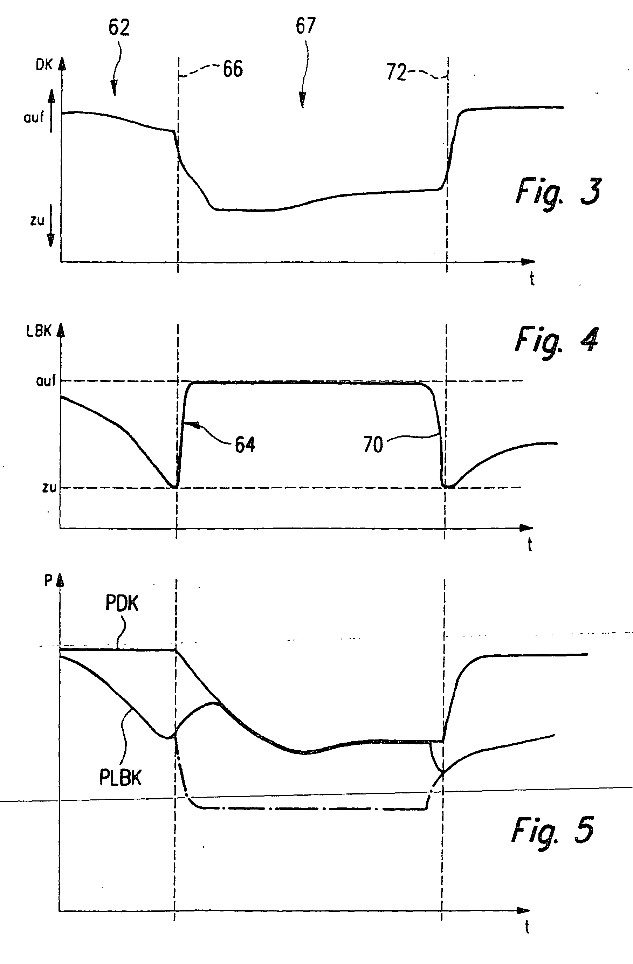

Nach dem Beginn des Verfahrens im Startblock 58 wird im Block 60 abgeprüft, ob die Bedingungen für Schubabschalten vorliegen. Die entsprechenden Bedingungen ergeben sich aus den Signalen beispielsweise des Stellungsgebers 54 des Gaspedals 52 und des Drehzahlgebers 50 der Kurbelwelle 48. Ist die Antwort im Block 60 "nein", erfolgt ein Rücksprung zum Eingang des Blocks 60. In diesem Fall liegen die Bedingungen für Schubabschalten also noch nicht vor. Dieser Bereich ist in den Diagrammen der Fig. 3 - 5 mit dem Bezugszeichen 62 gekennzeichnet. Die Stellmotoren 24 und 32 der Ladungsbewegungsklappe 22 und der Drosselklappe 30 werden dabei unabhängig voneinander entsprechend dem Fahrer-Wunschmoment angesteuert. Es ergeben sich die in Fig. 5 dargestellten Drücke, wobei der Druck im Kanal 18 mit PDK und der Druck im Ladungsbewegungskanal 20 hinter der Ladungsbewegungsklappe 22 mit PLBK bezeichnet ist.

Ist die Antwort im Block 60 "ja", dann liegen die Bedingungen für Schubabschalten vor. Dies kann auch eine Schließbewegung der Drosselklappe 30 zur Folge haben, was auch in Fig. 3 dargestellt ist. Um einem zu raschen Druckabfall im Kanal 18 jedoch vorzubeugen, wird durch einen entsprechenden Regeleingriff verhindert; dass sich die Drosselklappe 30 schlagartig schließen kann. Ein solches Vorgehen ist unter dem Begriff " Dashpot-Funktion" bekannt. Hierdurch wird ein schlagartiges Kraftstoffabdampfen eines gegebenenfalls im Kanal 18 vorhandenen Kraftstoff- oder Ölfilms mit entsprechender Gemischüberfettung und hoher HC-Emission vermieden. Der Schließbewegung der Drosselklappe 30 zu Beginn der Schubabschaltung entspricht in Fig. 4 das Bezugszeichen 64 für die Ladungsbewegungsklappe 22. Der Beginn der Schubabschaltung trägt das Bezugszeichen 66. Der Bereich der Schubabschaltung ist mit dem Bezugszeichen 67 gekennzeichnet.

Ist die Antwort im Block 60 also "ja", erfolgt im Block 64 vom Steuer- und Regelgerät 56 ein Stellsignal an den Stellmotor 24, durch welches die Ladungsbewegungsklappe 22 eine Stellung einnimmt, in der der Querschnitt des Ladungsbewegungskanals 20 im Wesentlichen freigegeben ist. Der entsprechende Bereich der Kurve von Fig. 4 trägt ebenfalls das Bezugszeichen 64. Die Druckverläufe einerseits im Kanal 18 und andererseits im Ladungsbewegungskanal 20 im Falle der Schubabschaltung ergeben sich aus Fig. 5. Danach steigt der Druck PLBK im Ladungsbewegungskanal 20 auf den Druck PDK an, welcher auch im Drallkanal 18 herrscht und sich aus dem mehr oder weniger starken Schließen der Drosselklappe 30 ergibt.

In Fig. 5 ist strichpunktiert jener Druck im Ladungsbewegungskanal 20 dargestellt, welcher sich ergäbe, wenn die Ladungsbewegungsklappe 22 nicht geöffnet werden würde. Man sieht deutlich, dass der Druck im Ladungsbewegungskanal 20 in diesem Falle deutlich niedriger wäre. Ein solch extrem niedriger Druck könnte dazu führen, dass Schmieröl vom Einlassventil 14 in den Ladungsbewegungskanal 20 strömt und sich an dessen Wänden ablagert. Auch Abgas könnte in den Ladungsbewegungskanal 20 strömen und zu Schmutzablagerungen an dessen Wänden führen. Diese Schmutzablagerungen könnten nachfolgend wiederum in den Brennraum 12 gelangen, wo sie beispielsweise das Einspritzventil 36 und die Zündkerze 40 verschmutzen könnten. Auch kann durch solche Verschmutzungen die Bewegung der Ladungsbewegungsklappe 22 eingeschränkt werden.

All dies würde die Verbrennung des Kraftstoffs im Brennraum 12 ungünstig beeinflussen, was zu einem Anstieg der Emissionen und gegebenenfalls sogar zu Verbrennungsaussetzern führen könnte. Auch eine Verschlechterung des Liefergrads wäre die Folge, was wiederum einen Leistungsverlust über die Lebensdauer der Brennkraftmaschine 10 bedeuten würde. All diese Effekte, die sich aus einem Druck entsprechend der strichpunktierten Linie in Fig. 5 im Ladungsbewegungskanal 20 ergeben, werden durch die Öffnung der Ladungsbewegungsklappe 22 und den entsprechenden Anstieg des Drucks PLBK im Ladungsbewegungskanal 20 im Falle der Schubabschaltung vermieden.

Im Block 68 wird geprüft, ob die Schubabschaltung beendet werden soll. Maßgeblich hierfür sind im Wesentlichen die Signale des Stellungsgebers 54 des Gaspedals 52. Ist die Antwort im Block 68 "nein", erfolgt ein Rücksprung zum Eingang dieses Blocks. Andernfalls wird im Block 70 der Stellmotor 24 der Ladungsbewegungsklappe 22 so angesteuert, dass diese in eine dem Fahrer-Wunschmoment entsprechende Position verschwenkt. In dem vorliegenden Ausführungsbeispiel wird angenommen, dass diese Soll-Position der Ladungsbewegungsklappe 22 einem vollständig geschlossenen Querschnitt des Ladungsbewegungskanals 20 entspricht. Der entsprechende Bereich in Fig. 4 trägt das Bezugszeichen 70.

Man erkennt, dass das Ende der Schubabschaltung, welches durch eine gestrichelte Linie gekennzeichnet ist, die das Bezugszeichen 72 trägt, gegenüber dem Beginn der Schließbewegung der Ladungsbewegungsklappe 22 verzögert ist. Erst wenn die Ladungsbewegungsklappe 22 einen tolerablen Abstand zur (geschlossenen) Soll-Position eingenommen hat, wird im Block 74 das Einspritzventil 36 so angesteuert, dass wieder ein Leistungsbetrieb der Brennkraftmaschine 10 stattfindet. Entsprechend erfolgt auch eine Öffnungsbewegung der Drosselklappe 30 (vgl. Fig. 3), welche zu einem Anstieg des Drucks PDK im Drallkanal 18 führt (vgl. Fig. 5). Dadurch, dass die Ladungsbewegungsklappe 22 geschlossen wird, bevor im Block 74 die entsprechenden Signale an das Einspritzventil 36 abgegeben werden, wird sichergestellt, dass der Leistungsbetrieb der Brennkraftmaschine 10 nach dem Ende der Schubabschaltung emissions- und verbrauchsoptimal erfolgen kann. Voraussetzung ist allerdings, dass die Bewegung der Ladungsbewegungsklappe sehr rasch (max. einige Zehntelsekunden) erfolgen kann. Um des Fahrkomforts willen muss ansonsten der Schubbetrieb beendet werden, auch wenn die Ladungsbewegung noch nicht optimal ist. Das Programm endet im Block 76.

Oben wurde der Fall beschrieben, dass die Schubabschaltung wegen einer Erhöhung des Fahrerwunschmoments erfolgt. Möglich ist aber auch der Fall, dass die Schubabschaltung beendet werden muss, um beispielsweise zu verhindern, dass eine Mindestdrehzahl der Brennkraftmaschine unterschritten wird. In diesem Fall kann aufgrund der Drehazahl und der Geschwindigkeit des Drehzahlabfalls der Zeitpunkt, zu dem die Schubabschaltung beendet werden muss, "vorausgeahnt" werden. Dies wiederum macht es möglich, die Ladungsbewegungsklappe entsprechend vorzeitig in die für die Wiederaufnahme der Verbrennung optimale Position zu bringen.

## Patentansprüche

1. Verfahren zum Betreiben einer Brennkraftmaschine (10), insbesondere eines Kraftfahrzeugs, bei dem der Kraftstoff direkt in den Brennraum (12) eingespritzt wird und bei dem der Querschnitt eines Abschnitts eines Luftzuführungskanals (28), mit dem mindestens einem Brennraum (12) mindestens zeitweise Verbrennungsluft zugeführt wird, mindestens zeitweise verengt wird, **dadurch gekennzeichnet, dass** bei einer Schubabschaltung der Querschnitt eines Ladungsbewegungskanals (20), mit dem die Strömung der Verbrennungsluft im Brennraum (12) beeinflusst werden kann, mindestens etwas, vorzugsweise maximal, freigegeben wird (64).

2. Verfahren nach Anspruch 1, **dadurch gekennzeichnet, dass** der Querschnitt des Ladungsbewegungskanals (20) durch die Verstellung einer Ladungsbewegungseinrichtung, insbesondere einer Ladungsbewegungsklappe (22), eines Ladungsbewegungsschiebers und/oder eines entsprechenden Strömungskörpers, mindestens etwas, vorzugsweise maximal, frei gegeben wird (64).

3. Verfahren nach einem der Ansprüche 2 oder 3, **dadurch gekennzeichnet, dass** der freie Querschnitt des Abschnitts des Luftzuführungskanals (20) kurz vor dem Wiederbeginn der Kraftstoffeinspritzung gegen Ende des Schubbetriebs wieder auf einen gewünschten Wert verengt wird (70).

4. Verfahren nach Anspruch 3, **dadurch gekennzeichnet, dass** der Querschnitt des Abschnitts des Luftzuführungskanals (20) allmählich im Sinne eine Dashpot-Funktion verengt wird.

5. Computerprogramm für eine Steuer-und/oder Regeleinrichtung einer Brennkraftmaschine, **dadurch gekennzeichnet, dass** es zur Durchführung des Verfahrens nach einem der vorhergehenden Ansprüche programmiert ist.

6. Elektrisches Speichermedium für eine Steuer- und/oder Regeleinrichtung einer Brennkraftmaschine, **dadurch gekennzeichnet, dass** auf ihm ein Computerprogramm zur Anwendung in einem Verfahren der Ansprüche 1 bis 4 abgespeichert ist.

7. Steuer- und/oder Regelgerät (56) zum Betreiben einer Brennkraftmaschine (10), insbesondere eines Kraftfahrzeugs, **dadurch gekennzeichnet, dass** es zur Anwendung in einem Verfahren nach einem der Ansprüche 1 bis 4 programmiert ist.

## Claims

1. Method for operating an internal combustion engine (10), in particular of a motor vehicle, in which method the fuel is injected directly into the combustion chamber (12) and in which method the cross section of a section of an air supply duct (28), by means of which combustion air is supplied to at least one combustion chamber (12) at least at times, is narrowed at least at times, **characterized in that** the cross section of a charge movement duct (20), by means of which the flow of the combustion air in the combustion chamber (12) can be influenced, is at least partially, preferably completely opened (64) in the event of an overrun cutoff.

2. Method according to Claim 1, **characterized in that** the cross section of the charge movement duct (20) is at least partially, preferably completely opened (64) by means of an adjustment of a charge movement device, in particular a charge movement flap (22), a charge movement slider and/or a corresponding flow body.

3. Method according to one of Claims 2 or 3, **characterized in that** the free cross section of the section of the air supply duct (20) is narrowed again to a desired value (70) shortly before the fuel injection restarts at the end of the overrun operating mode.

4. Method according to Claim 3, **characterized in that** the cross section of the section of the air supply duct (20) is narrowed gradually in terms of a dashpot function.

5. Computer program for an open-loop and/or closed-loop control device for an internal combustion engine, **characterized in that** it is programmed for carrying out the method according to one of the preceding claims.

6. Electrical storage medium for an open-loop and/or closed-loop control device of an internal combustion engine, **characterized in that** it has stored on it a computer program for use in a method according to Claims 1 to 4.

7. Open-loop and/or closed-loop control device (56) for operating an internal combustion engine (10), in particular of a motor vehicle, **characterized in that** it is programmed for use in a method according to one of Claims 1 to 4.

## Revendications

1. Procédé de gestion d'un moteur à combustion interne (10), en particulier d'un véhicule automobile, dans lequel le carburant est injecté directement dans la chambre de combustion (12) et la section transversale d'une partie d'un canal d'entrée d'air (28) qui amène l'air de combustion au moins temporairement à au moins une chambre de combustion (12), est rétrécie au moins temporairement,
**caractérisé en ce que**
lors d'une coupure de poussée, la section transversale d'un canal de mouvement de charge (20), influençant l'écoulement de l'air de combustion dans la chambre de combustion (12), est libérée au moins légèrement, de préférence au maximum (64).

2. Procédé selon la revendication 1,
**caractérisé en ce que**
la section transversale du canal de mouvement de charge (20) est libérée au moins légèrement, de préférence au maximum (64), par le réglage d'un dispositif de mouvement de charge, en particulier d'un clapet de mouvement de charge (22), d'une vanne de mouvement de charge et/ou d'un corps d'écoulement correspondant.

3. Procédé selon l'une quelconque des revendications 1 ou 2,
**caractérisé en ce que**
la section transversale libre de la partie du canal d'amenée d'air (20) est de nouveau rétrécie à une valeur souhaitée (70) peu avant la reprise de l'injection de carburant vers la fin du fonctionnement de poussée.

4. Procédé selon la revendication 3,
**caractérisé en ce que**
la section transversale de la partie du canal d'amenée d'air (20) est rétrécie progressivement dans le sens d'une fonction d'amortisseur.

5. Programme informatique pour un dispositif de commande et/ou de régulation d'un moteur à combustion interne,
**caractérisé en ce qu'**
il est programmé pour la mise en oeuvre du procédé selon l'une quelconque des revendications précédentes.

6. Moyen de mémoire électrique pour un dispositif de commande et/ou de régulation d'un moteur à combustion interne,
**caractérisé en ce qu'**
il contient en mémoire un programme informatique à appliquer dans un procédé des revendications 1 à 4.

7. Appareil de commande et/ou de régulation (56) pour le fonctionnement d'un moteur à combustion interne (10), en particulier d'un véhicule automobile,
**caractérisé en ce qu'**
il est programmé pour appliquer un procédé selon l'une quelconque des revendications 1 à 4.
